# EUROPÄISCHE PATENTSCHRIFT

(11) **EP 0 995 572 B1**
(45) Veröffentlichungstag und Bekanntmachung des Hinweises auf die Patenterteilung: **12.06.2002**
(21) Anmeldenummer: 99120490.0
(22) Anmeldetag: 15.10.1999
(51) Int. Cl.: B29C 45/18, B29B 7/60

(54) **Dosier- und Fördereinrichtung für Kunststoffkomponenten**
Metering and delivery device for plastic components
Dispositif de dosage et transport pour des composants de matière plastique

(30) Priorität: 19.10.1998 DE 19848060
(43) Veröffentlichungstag der Anmeldung: 26.04.2000
(73) Patentinhaber: Hehl, Karl, 72290 Lossburg (DE)
(72) Erfinder: Hehl, Karl, 72290 Lossburg (DE)
(74) Vertreter: Reinhardt, Harry

(56) Entgegenhaltungen:
- AT-B- 403 135
- DE-U- 29 512 047
- "On-machine color blender" MODERN PLASTICS INTERNATIONAL, Bd. 7, Nr. 6, Juni 1977 (1977-06), Seite 113 XP002128665
- PATENT ABSTRACTS OF JAPAN vol. 009, no. 014 (M-352), 22. Januar 1985 (1985-01-22) & JP 59 164124 A (KOBE SEIKOSHO KK), 17. September 1984 (1984-09-17)
- "Appareils automatiques pour la coloration" PLASTIQUES MODERNES ET ELASTOM RES, Bd. 28, Nr. 9, November 1976 (1976-11), Seite 74 XP002128664

## Beschreibung

Die Erfindung betrifft eine Dosier- und Fördereinrichtung für Kunststoffkomponenten nach dem Oberbegriff des Anspruches 1.

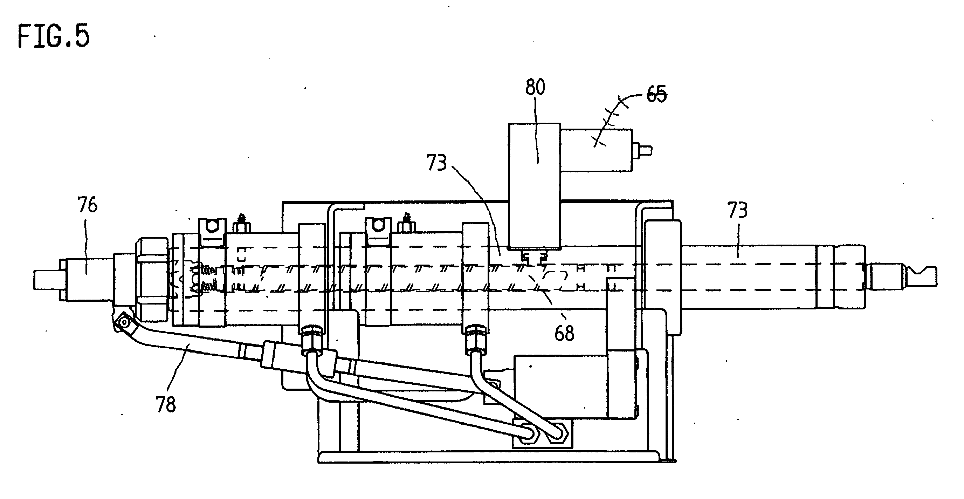

Eine derartige Dosier- und Fördereinrichtung ist beispielsweise aus der AT 403 135 B bekannt und wird dort in Verbindung mit einer Spritzgießmaschine eingesetzt. Über Zahnradpumpen werden die verschiedenen Komponenten eines Flüssig-Silikonkautschuks einem Mischer zugeführt und von diesem Mischer, der wie im übrigen die gesamte Dosier- und Fördereinrichtung von der Spritzgießmaschine entfernt angeordnet ist, über flexible Leitungen der Spritzgießeinheit der Spritzgießmaschine zugeführt. Dort wird im Hinblick auf die Fig. 5 auf Seite 8, Zeilen 14-41 eine Ausführungsform vorgeschlagen, bei der die beiden Zahnradpumpen für die beiden Komponenten elektronisch geregelt betrieben werden. Es erfolgt dabei eine Mengenregelung, wobei durch eine Steuereinrichtung ein voreingestelltes Dosier- bzw. Mischungsverhältnis beibehalten werden soll.

Aus der DE 196 53 O99 A1 ist ein Extruder bekannt, dem zwei verschiedene Kunststoffkomponenten zugeführt werden. Die Kunststoffkomponenten werden über Förderleitungen einem Mischer zugeführt, der zugleich das Fördermittel darstellt. Die Spritzgießeinheit ist damit zugleich Dosier- und Fördereinrichtung. Im Mischer wird das Material durch Bewegung einer Antriebswelle durch Mischelemente gepreßt und anschließend unmittelbar in die Form eingespritzt. Auswechselbare Behälter zur Aufnahme der Kunststoffkomponenten sind nicht vorgesehen. Stattdessen werden in vorgeschalteten Förderelementen in Form von Plastifizierextrudem die beiden gemeinsam zu verarbeitenden Kunststoffkomponenten aufgeschmolzen. Dadurch ist es nicht möglich, derartige Kunststoffkomponenten über eine übliche unveränderte Spritzgießeinheit mit Förderschnecke als Fördermittel einzuspritzen. Da das Mischen nicht vom Fördern entkoppelt ist, stellt sich nicht das Problem, daß eine Verbindung zwischen Dosier- und Fördereinrichtung sowie Spritzgießeinheit geschaffen werden muß.

Ausgehend von dem Stand der Technik nach der AT 403 135 B liegt der vorliegenden Erfindung die Aufgabe zugrunde, eine Dosier- und Fördereinrichtung zu schaffen, die weitestgehend auf flexible Leitungen insbesondere nach dem Mischer verzichten kann.

Diese Aufgabe wird durch eine Dosier- und Fördereinrichtung mit den Merkmalen des Anspruches 1 gelöst.

Die Dosier- und Fördereinrichtung ist auf der Spritzgießeinheit angeordnet, so daß sich dadurch eine Verkürzung eventuell noch erforderlicher Leitungen ergibt. Darüber hinaus steht der Mischer selbst mit dem Zuführkanal zur Zuführung des Materials in die Spritzgießeinheit in fester Verbindung. Damit kann vorzugsweise auf flexible Leitungen in diesem äußerst gefährdeten Bereich verzichtet werden. Bei der Mischung von Kunststoffkomponenten kann es nämlich zu Störungen und Vernetzungen kommen. Schwachbereiche sind oft die flexiblen Leitungen und damit die Zuführleitungen von der Dosier- und Fördereinrichtung zur Spritzgießeinheit. Dieser Schwachbereich wird durch die vorgenommene Anordnung und dem damit möglichen Verzicht auf flexible Leitungen beseitigt, was zur Sicherheit der gesamten Maschine beiträgt.

Das Gemisch wird also bewußt vom Mischer bis zum eigentlichen Fördermittel gefördert, so dass das Material nicht aus einem gesonderten Mischer an die Spritzgießeinheit und dort an das Fördermittel übergeben werden muss, zumindest wenn man nicht eine eigene spezielle Spritzgießeinheit mit entsprechenden Mischelementen im Bereich des Fördermittels gestalten will. Während aber der Stand der Technik vorschlägt, eine gesonderte Mischanlage vorzusehen und das Material über flexible Leitungen zuzuführen, werden nun nicht nur die Längen der Förderleitungen verringert und feste Verbindungen geschaffen, es kann auch eine übliche Spritzgießeinheit ohne vorherige Umbauten zur Verarbeitung derartiger Gemische eingesetzt werden.

Bei einer Ausführung nach Anspruch 2 läßt sich ein kompakter Aufbau verwirklichen. Alle Baugruppen können als kompakte, in sich geschlossene bauliche Einheit der Spritzgießmaschine zugeführt werden. Durch die Anordnung auf der Spritzgießeinheit vergrößert sich nicht die Aufstellfläche der Maschine. Gleichzeitig kann die Dosierund Fördereinrichtung unmittelbar von der Maschinensteuerung angesteuert werden.

Die kompakte Dosier- und Fördereinrichtung kann beliebig versetzt werden, um z.B. in Verbindung mit vertikal in die Trennebene arbeitenden Spritzgießeinheiten Verwendung zu finden. Sie kann im Werk des Herstellers auf Funktionsfähigkeit getestet werden, so daß sie beim Kunden problemlos in Betrieb genommen werden kann, selbst wenn sich der Kunde in entlegenen Gebieten der Erde befindet.

Bei einer Ausgestaltung nach Anspruch 3 wird die Möglichkeit geschaffen, die Fördermotoren druckgeregelt zu betreiben. Da auf flexible Leitungen verzichtet werden kann, ist diese Druckregelung genauer als die bisher vorgenommene Mengenregelung, so daß eine gleichbleibende Qualität der zugeführten Kunststoffkomponenten gewährleistet ist. Darüber hinaus ist die Druckregelung günstiger zu verwirklichen als die bisher verwendete Mengenregelung.

Weitere Vorteile ergeben sich aus den weiteren Unteransprüchen.

Im folgenden wird die Erfindung anhand eines in den Figuren dargestellten Ausführungsbeispieles näher erläutert. Es zeigen:
- Fig. 1: Eine mit der Dosier- und Fördereinrichtung versehene Spritzgießmaschine in Seitenansicht,
- Fig. 2: einen vergrößerten Ausschnitt von Fig. 1 im Bereich der Dosieranlage D,
- Fig. 3: eine Ansicht gemäß Pfeil III in Fig. 1,
- Fig. 4: eine Ansicht gemäß Pfeil IV in Fig. 1,
- Fig. 5: den Plastifizierzylinder in Seitenansicht.

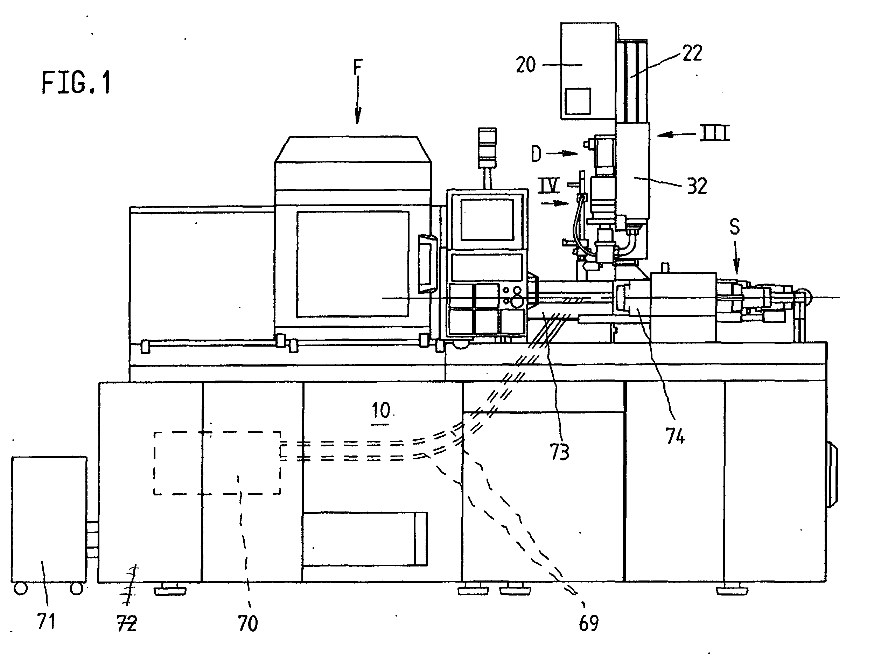

Fig. 1 zeigt eine Spritzgießmaschine zur Verarbeitung von Kunststoffen, die im vorliegenden Fall zur Verarbeitung von miteinander zu mischenden Kunststoffkomponenten eingesetzt wird. Es handelt sich dabei z.B. um Flüssigsilikonkautschuke, deren Komponenten gesondert einem Mischer 63 zugeführt werden. Nach dem Mischen verbleibt eine gewisse Reaktionszeit, die Topfzeit, innerhalb derer die Komponenten verarbeitet werden müssen. Die Aushärtung dieser Komponenten wird meist dadurch verzögert, daß sie z.B. beim Fördern bis in den Formhohlraum einer zeichnerisch nicht dargestellten Spritzgießform gekühlt werden, während sie in der Spritzgießform erhitzt werden, so daß es zu einem Aushärten kommt. Die in Fig. 1 dargestellte Dosieranlage D ist auf einem Trägerblock 74 der Spritzgießeinheit S abgestützt. Die Spritzgießeinheit S überführt das Kunststoffkomponentengemisch mit einem Fördermittel 68 in den Formhohlraum der Spritzgießform, die in der Formschließeinheit F aufgenommen ist. Spritzgießeinheit S und Formschließeinheit F befinden sich im Ausführungsbeispiel auf einem Maschinenfuß 10.

Über eine Temperierung 70 und einen Temperierkreislauf 69 wird der Plastifizierzylinder 73 der Spritzgießeinheit S temperiert. Femer ist in der Spritzgießmaschine eine Vakuumsteuerung integriert und kann ein Temperiergerät 71 zusätzlich angeschlossen werden.

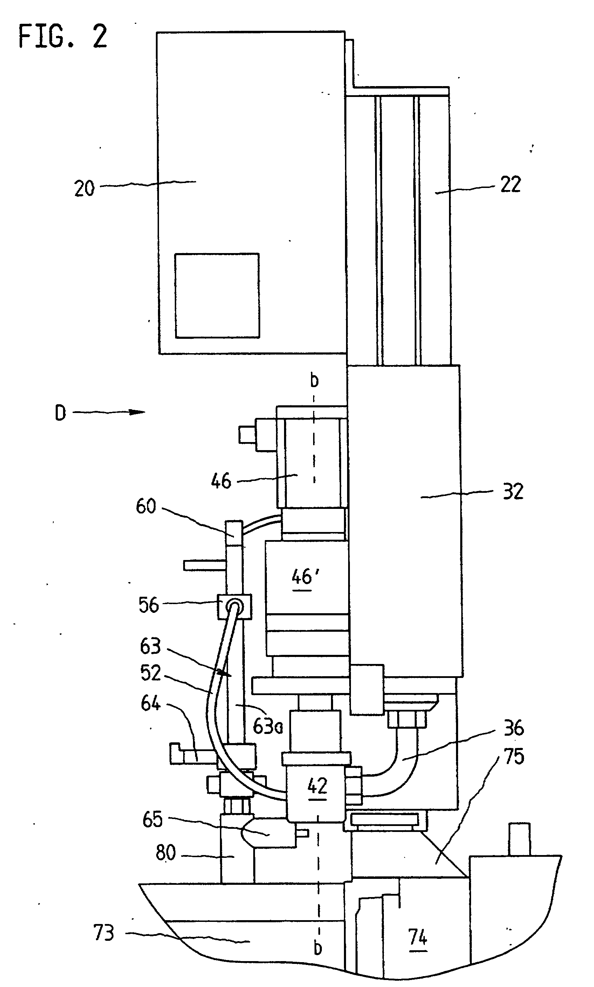

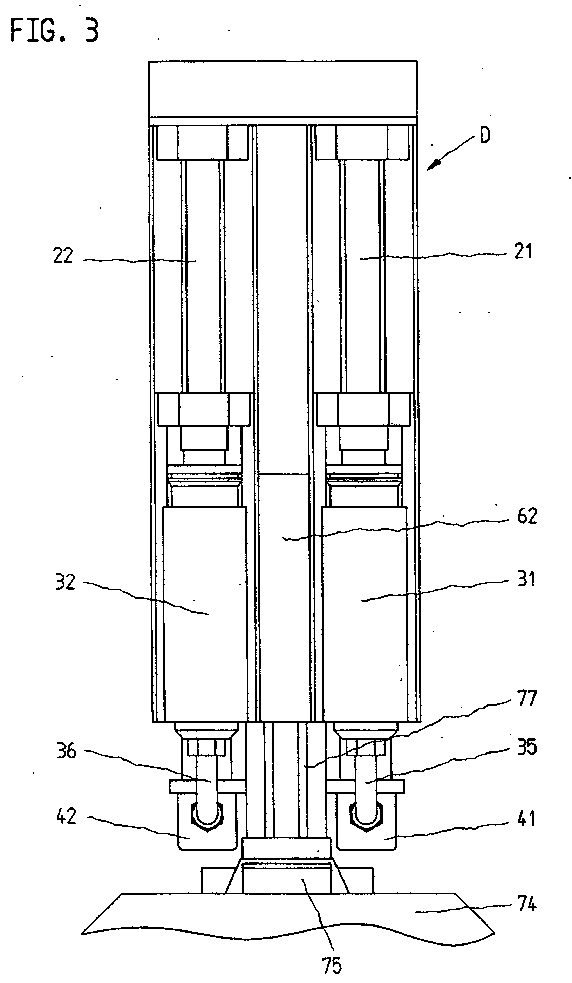

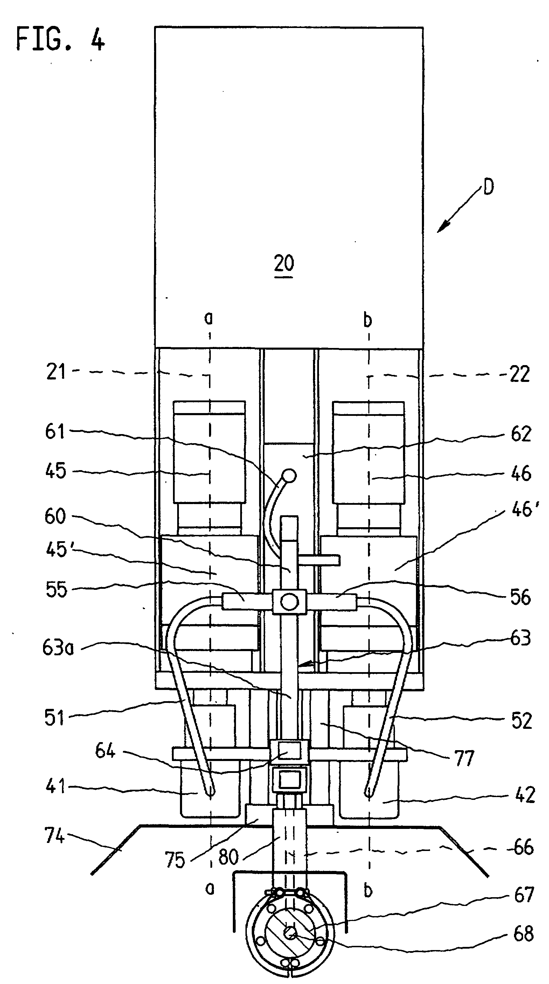

Der Aufbau der Dosier- und Fördereinrichtung für Kunststoffkomponenten ergibt sich aus den Figuren 2-4. in Fig. 3, einer Ansicht der Dosieranlage D in Fig. 1 von rechts, sind zwei - es können auch mehr sein - Behälter 31,32 zur Aufnahme von zwei Komponenten dargestellt. Es handelt sich bei diesen Behältern um austauschbare Kartuschen. Diese Kartuschen werden von Kolben-Zylinder-Einheiten 21,22 unter den zum Fördern nötigen Förderdruck gesetzt. Infolge dieses Förderdrucks gelangen die Kunststoffkomponenten getrennt voneinander in Förderleitungen 35,51 bzw. 36,52. Sie werden vom jeweiligen Behälter 31,32 zu einem Mischer 63 gefördert, der am besten in Fig. 4 zu erkennen ist. Über eine weitere Förderleitung gelangt das Kunststoffkomponentengemisch aus dem Mischer 63 zur Spritzgießeinheit S.

Die Dosier- und Fördereinrichtung ist gemäß Fig. 1 auf der Spritzgießeinheit S angeordnet. Genauer gesagt befindet sie sich auf einem Anschlußelement 75 des Trägerblocks 74, mit dem sich ihrerseits die Spritzgießeinheit S auf dem Maschinenständer 10 abstützt. Die Abstützung erfolgt über ein Stützelement 77.

Zum Dosieren der einzelnen Kunststoffkomponenten sind mehrere Dosiereinheiten (je Kunststoffkomponente eine) in Form von Zahnradpumpen 41,42 vorgesehen, die die Kunststoffkomponenten aus den Behältern 31,32 in die Förderleitungen 51,52 dosieren und dabei die Förderleistung erhöhen.

Gemäß Fig. 2, 4 steht der Mischer 63 mit dem als weitere Förderleitung ausgebildeten Zuführkanal 66 in vorzugsweise fester Verbindung, wie z.B. Rohrleitungen, im Gegensatz zu einer flexiblen Verbindung. Dadurch kann in diesem gefährdeten Bereich auf flexible Leitungen verzichtet werden. Gleichzeitig wird die Leitungslänge verkürzt. Störungen sind hier mittels z.B. fester Rohrverbindungen besser beherrschbar. insofern ist ein Mischrohr 63a des Mischers 63 mit dem Zuführkanal 66 unmittelbar in koaxialer Verbindung.

Am Mischer 63 ist ein Druckaufnehmer 64 vorgesehen. Der Druckaufnehmer mißt Druckistwerte innerhalb des Mischrohres und gibt diese zur Druckregelung der Fördermotoren 45,46 weiter. Die Fördermotoren 45,46 sind als Servomotoren ausgebildet, so daß sich eine exakte Dosierung und damit kontinuierliche Zuführung bei gleichbleibender Qualität des Kunststoffkomponentengemischs verwirklichen läßt.

Die Zahnradpumpen 41,42 werden von den Fördermotoren 45,46 über Getriebe 45',46' angetrieben. Von den Zahnradpumpen 41,42 gelangen die beiden Komponenten, noch in gesonderten Förderleitungen, zum Mischer 63, wobei zwischen Mischer und Förderleitungen Rückschlagventile 55,56 vorgesehen sind, die einen Rückfluß von gemischtem Material in die Förderleitungen 51,52 verhindern. Die Förderleitungen 51,52 sind bereits Dosierabschnitte, da hier ein nach den Vorgaben der Regelung dosiertes Volumen in den Förderleitungen vorliegt. Im statischen Mischer 63 werden die Komponenten gemischt, die über den Zuführkanal 66 dem Plastifizierzylinder 67 mit dem darin befindlichen Fördermittel 68 zugeführt werden. Von hier wird das Material über die Düse 76 in den Formhohlraum der Spritzgießform eingespritzt.

Oberhalb der Anschlüsse der Förderleitungen 51,52 am Mischer 63 ist eine weitere Dosiereinrichtung 60 für die Zugabe von Additiven vorgesehen. Diese Additive können aus einem Behälter 62 über die Leitung 61 zugeführt werden. Additive können z.B. Farbzusätze oder chemische Zusätze wie Härter, Beschleuniger oder Verzögerer oder Zusätze zur Modifizierung der Werkstoffeigenschaften sein.

Die Figuren zeigen die gesamte Dosier- und Fördereinrichtung als kompakte bauliche Einheit. Diese Einheit kann problemlos bei Bedarf an der Spritzgießmaschine montiert werden. Sie ist an beliebig einsetzbar, z.B. auch in Verbindung mit einer in die Trennebene einspritzenden Spritzgießeinheit. Die kompakte Dosier- und Fördereinrichtung kann im Betrieb des Herstellers vorgefertigt und auf Funktionalität geprüft werden, so daß sie beim Kunden nur noch am Tragkörper der Maschine befestigt werden muß. Die Aufstellfläche der Maschine wird nicht vergrößert und die Einrichtung kann mit der an der Spritzgießmaschine vorhandenen Maschinensteuerung betrieben werden.

Für diese Kompaktheit der Dosier- und Fördereinrichtung wurden mehrere Anordnungen ausgewählt, die nicht nur zu einer Verkürzung sämtlicher Förderleitungen beitragen, wobei auch die Förderleitungen 35,36,51,52 als feste Leitungen ausgebildet sein können, wenngleich sie im Ausführungsbeispiel flexibel sind. Zunächst stehen die Fördermotoren 45,46 mit ihren Getrieben 45',46' und den druckgeregelten Zahnradpumpen 41,42 vertikal entlang der Motorachse a-a bzw. b-b. Das Mischrohr 63a ist im wesentlichen parallel zu diesen Motorachsen der Fördermotoren 45,46. Auch die Kolben-Zylindereinheiten 21,22 stehen im wesentlichen parallel zu diesen Motorachsen a-a, b-b. So ergibt sich eine schlanke, nach oben ragende Einheit, wobei der Raum über den Fördermotoren 45, 46 zugleich für den Steuerschrank 20 genutzt wird. Als Tragteil kann für diesen Steuerschrank 20 der Zylinder der Kolben-Zylinder-Einheiten 21,22 dienen. Dadurch liegen die Bauteile der Dosier- und Fördereinrichtung im wesentlichen innerhalb der Vertikalprojektion des am oberen Ende der Einrichtung angeordneten Steuerschranks 20 sowie der Kolben-Zylinder-Einheiten 21,22.

Auch für den Behälters 62 zur Aufnahme der Additive wurde eine kompakte Anordnung gewählt. Gemäß den Figuren befindet sich dieser Behälter in dem Zwischenraum zwischen den beiden Behältern 31,32 und den Fördermotoren 45,46.

Bei Montage der Dosier- und Fördereinrichtung muß diese nur auf dem Trägerblock 74 der Spritzgießeinheit montiert werden. Wird der in Fig. 5 dargestellte Plastifizierzylinder 73 am Trägerblock 74 festgelegt, kann der Mischer 63 mit dem Anschlußelement 80 verbunden werden. Dort ist nochmals ein Sicherheitsventil vorgesehen. Um die Verarbeitung des Materials zu ermöglichen, ist ein hydraulischer Düsenverschlußmechanismus 78 vorgesehen.

## Patentansprüche

1. Dosier- und Fördereinrichtung für flüssige, pastöse Kunststoffkomponenten zum Einsatz in Verbindung mit einer Kunststoff-Spritzgießmaschine, die eine Spritzgießeinheit (S) aufweist, mit
- mehreren auswechselbaren Behältern (31,32) zur Aufnahme der Kunststoffkomponenten,
- Förderleitungen (35,51, 36,52) zum Fördern der Kunststoffkomponenten von den jeweiligen Behältem (31,32) zu einem Mischer (63),
- mehreren Dosiereinheiten mit voneinander unabhängig regelbaren Fördermotoren (45,46) zur Dosierung der einzelnen Kunststoffkomponenten aus den Behältern (31,32) in die Förderleitungen (51,52),
- einer weiteren Förderleitung zum Fördern des Kunststoffkomponentengemischs aus dem Mischer (63) zur Spritzgießeinheit (S),
**dadurch gekennzeichnet, daß** die Dosier- und Fördereinrichtung auf der Spritzgießeinheit (S) angeordnet ist, daß der Mischer (63) mit dem als weitere Förderleitung ausgebildeten Zuführkanal (66) der Spritzgießeinheit (S) zur Zufuhr an ein Fördermittel (68) in fester Verbindung steht und dass je Kunststoffkomponente ein druckgeregelter Fördermotor (45,46) vorgesehen ist.

2. Dosier- und Fördereinrichtung nach Anspruch 1, **dadurch gekennzeichnet, daß** sie als bauliche Einheit auf der Spritzgießeinheit angeordnet ist und daß ein Mischrohr (63a) des Mischers (63) unmittelbar mit dem Zuführkanal in koaxialer Verbindung steht.

3. Dosier- und Fördereinrichtung nach Anspruch 1 oder 2, **dadurch gekennzeichnet, daß** am Mischer (63) ein Druckaufnehmer (64) angeordnet ist, der Druckistwerte zur Druckregelung der als Servomotoren ausgebildeten Fördermotoren (45,46) liefert.

4. Dosier- und Fördereinrichtung nach einem der Ansprüche 1 bis 3, **dadurch gekennzeichnet, daß** von den Fördermotoren (45,46) geregelt angetriebene und als Dosiereinheiten ausgebildete Zahnradpumpen (41,42) mit dem Mischer (63) über Förderleitungen (51,52) in Verbindung stehen, die als Dosierabschnitte ausgebildet sind.

5. Dosier- und Fördereinrichtung nach einem der Ansprüche 1 bis 4, **dadurch gekennzeichnet, daß** das Mischrohr (63a) des Mischers im wesentlichen parallel zu den vertikal stehenden Motorachsen (a-a, b-b) der Fördermotoren (45,46) angeordnet ist.

6. Dosier- und Fördereinrichtung nach einem der Ansprüche 1 bis 5, **dadurch gekennzeichnet, daß** Kolben-Zylinder-Einheiten (21,22) zur Erzeugung des Förderdrucks auf die Behälter (31,32) im wesentlichen parallel zu den vertikal stehenden Mittelachsen (a-a, b-b) der Fördermotoren (45,46) sind.

7. Dosier- und Fördereinrichtung nach Anspruch 6, **dadurch gekennzeichnet, daß** die Kolben-Zylinder-Einheiten (21,22) zugleich einem Steuerschrank (20) für die Dosier- und Fördereinrichtung als Tragteil dienen.

8. Dosier- und Fördereinrichtung nach einem der vorhergehenden Ansprüche, **dadurch gekennzeichnet, daß** die Bauteile der Dosier- und Fördereinrichtung im wesentlichen innerhalb einer Vertikalprojektion eines am oberen Ende der Einrichtung angeordneten Steuerschranks (20) sowie von Kolben-Zylinder-Einheiten (21,22) zur Erzeugung des Förderdrucks auf die Behälter (31,32) liegen.

9. Dosier- und Fördereinrichtung nach einem der vorhergehenden Ansprüche, **dadurch gekennzeichnet, daß** der Mischer (63) oberhalb des Anschlusses der Förderleitungen (51,52) mit einer weiteren Dosiereinrichtung (60) für die Zugabe von Additiven in Verbindung steht.

10. Dosier- und Fördereinrichtung nach einem der vorhergehenden Ansprüche, **dadurch gekennzeichnet, daß** ein Behälter (62) zur Aufnahme der Additive zwischen den beiden Behältern (31,32) und den Fördermotoren (45,46) angeordnet ist.

## Claims

1. Metering and conveying means for liquid, pasty plastics material components for use in conjunction with a plastics material injection moulding machine, which includes an injection moulding unit (S), said means having
- a plurality of interchangeable containers (31,32) for accommodating the plastics material components,
- feed pipes (35,51, 36,52) for conveying the plastics material components from the respective containers (31,32) to a mixer (63),
- a plurality of metering units with delivery motors (45,46), which can be regulated independently of one another, for metering the individual plastics material components from the containers (31,32) into the feed pipes (51,52), and
- an additional feed pipe for conveying the mixture of plastics material components from the mixer (63) to the injection moulding unit (S),
**characterised in that** the metering and conveying means is disposed on the injection moulding unit (S), **in that** the mixer (63) communicates securedly with the supply duct (66) of the injection moulding unit (S) to supply the mixture to a conveying means (68), said duct being in the form of an additional feed pipe, and **in that** one pressure-regulated delivery motor (45,46) is provided for each plastics material component.

2. Metering and conveying means according to claim 1, **characterised in that** it is disposed as a structural unit on the injection moulding unit, and **in that** a mixing tube (63a) of the mixer (63) is in axial communication directly with the supply duct.

3. Metering and conveying means according to claim 1 or 2, **characterised in that** a pressure sensor (64) is disposed on the mixer (63) and supplies actual pressure values to regulate the pressure of the delivery motors (45,46), which are in the form of servomotors.

4. Metering and conveying means according to one of claims 1 to 3, **characterised in that** gear pumps (41,42), which are driven in a regulated manner by the delivery motors (45,46) and are in the form of metering units, communicate with the mixer (63) via feed pipes (51,52), which are in the form of metering portions.

5. Metering and conveying means according to one of claims 1 to 4, **characterised in that** the mixing tube (63a) of the mixer is disposed substantially parallel to the vertically extending motor axes (a-a, b-b) of the delivery motors (45,46).

6. Metering and conveying means according to one of claims 1 to 5, **characterised in that** piston-and-cylinder units (21,22) for generating the conveying pressure upon the containers (31,32) are substantially parallel to the vertically extending central axes (a-a, b-b) of the delivery motors (45,46).

7. Metering and conveying means according to claim 6, **characterised in that** the piston-and-cylinder units (21,22) serve simultaneously to support a control cabinet (20) for the metering and conveying means.

8. Metering and conveying means according to one of the preceding claims, **characterised in that** the structural members of the metering and conveying means lie substantially internally of a vertical projection of a control cabinet (20), which is disposed at the upper end of the means, as well as of piston-and-cylinder units (21,22) for generating the conveying pressure upon the containers (31,32).

9. Metering and conveying means according to one of the preceding claims, **characterised in that** the mixer (63) communicates with an additional metering means (60) for the addition of additives above the junction between the feed pipes (51,52).

10. Metering and conveying means according to one of the preceding claims, **characterised in that** a container (62) for accommodating the additives is disposed between the two containers (31,32) and the delivery motors (45,46).

## Revendications

1. Dispositif de dosage et de transport pour composants de matière plastique liquides, pâteux, destiné à être utilisé en combinaison avec une machine d'injection de matière plastique, qui comporte une unité d'injection (S), avec
- plusieurs récipients (31, 32) échangeables destinés à recevoir les composants de matière plastique,
- des conduits de transport (35, 51, 36, 52) pour transporter les composants de matière plastique depuis les récipients (31, 32) respectifs vers un mélangeur (63),
- plusieurs unités de dosage avec des moteurs de transport (45, 46) pouvant être réglés indépendamment les uns des autres, pour le dosage des différents composants de matière plastique provenant des récipients (31, 32) dans les conduits de transport (51, 52),
- un autre conduit de transport pour transporter le mélange de composants de matière plastique depuis le mélangeur (63) vers l'unité de moulage par injection (S),
**caractérisé en ce que** le dispositif de dosage et de transport est disposé sur l'unité de moulage par injection (S), **en ce que** le mélangeur (63) est en liaison fixe avec le canal d'amenée (66), conformé en autre conduit de transport, de l'unité d'injection (S) pour l'amenée à un moyen de transport (68), et **en ce qu'**il est prévu un moteur de transport (45, 46) régulé en pression par composant de matière plastique.

2. Dispositif de dosage et de transport selon la revendication 1, **caractérisé en ce qu'**il est disposé, en tant qu'ensemble constructif, sur l'unité d'injection et **en ce qu'**un tube de mélange (63a) du mélangeur (63) est en liaison coaxiale directe avec le canal d'amenée.

3. Dispositif de dosage et de transport selon la revendication 1 ou 2, **caractérisé en ce que** sur le mélangeur (63) est disposé un capteur de pression (64) qui fournit les valeurs réelles de la pression pour la régulation en pression des moteurs de transport (45, 46) conformés en servomoteurs.

4. Dispositif de dosage et de transport selon l'une des revendications 1 à 3, **caractérisé en ce que** des pompes à engrenages (41, 42) entraînées de manière régulée par les moteurs de transport (45, 46) et conformées en unités de dosage, sont en liaison avec le mélangeur (63), par des conduits de transport (51, 52) qui sont conformés en tronçons de dosage.

5. Dispositif de dosage et de transport selon l'une des revendications 1 à 4, **caractérisé en ce que** le tube de mélange (63a) du mélangeur est disposé sensiblement parallèlement aux axes de moteur (a-a, b-b) verticaux des moteurs de transport (45, 46).

6. Dispositif de dosage et de transport selon l'une des revendications 1 à 5, **caractérisé en ce que** des unités à cylindre et piston (21, 22) destinées à produire la pression de transport sur les récipients (31, 32) sont sensiblement parallèles aux axes médians (a-a, b-b) verticaux des moteurs de transport (45, 46).

7. Dispositif de dosage et de transport selon la revendication 6, **caractérisé en ce que** les unités à cylindre et piston (21, 22) servent en même temps d'éléments porteurs à une armoire de commande (20) pour le dispositif de dosage et de transport.

8. Dispositif de dosage et de transport selon l'une des revendications précédentes, **caractérisé en ce que** les composants du dispositif de dosage et de transport se situent sensiblement à l'intérieur d'une projection verticale d'une armoire de commande (20), disposée à l'extrémité supérieure du dispositif, ainsi que d'unités à cylindre et piston (21, 22) destinées à produire la pression de transport sur les récipients (31, 32).

9. Dispositif de dosage et de transport selon l'une des revendications précédentes, **caractérisé en ce que** le mélangeur (33) est en liaison, au-dessus du raccord des conduits de transport (51, 52), avec un autre dispositif de dosage (60) pour l'ajout d'additifs.

10. Dispositif de dosage et de transport selon l'une des revendications précédentes, **caractérisé en ce qu'**un récipient (62) destiné à recevoir les additifs est disposé entre les deux récipients (31, 32) et les moteurs de transport (45, 46).
